Europäisches Patentamt

(19) European Patent Office

Office européen des brevets

(11) EP 0 818 613 A1

## (12) EUROPEAN PATENT APPLICATION

(43) Date of publication:
14.01.1998 Bulletin 1998/03

(51) Int. Cl.⁶: **F01N 3/28**

(21) Application number: 97110551.5

(22) Date of filing: 27.06.1997

(84) Designated Contracting States:
AT BE CH DE DK ES FI FR GB GR IE IT LI LU MC NL PT SE

(30) Priority: 08.07.1996 US 15860 P

(71) Applicant: **CORNING INCORPORATED**
**Corning, N.Y. 14831 (US)**

(72) Inventors:
 • **Fu, Xiadong**
 **SP FR 02-12, Corning, NY 14831 (US)**

 • **Patil, Mallanagouda Dyamanagouda**
 **SP FR 02-12, Corning, NY 14831 (US)**
 • **Stutts, Brian Ensel**
 **SP FR 02-12, Corning, NY 14831 (US)**
 • **Then, Paul Michael**
 **SP FR 02-12, Corning, NY 14831 (US)**

(74) Representative:
 **Reinhard - Skuhra - Weise & Partner**
 **Postfach 44 01 51**
 **80750 München (DE)**

### (54) Exhaust gas purifying system

(57) The invention is directed at engine exhaust purifying system comprising a catalytic substrate (14) structure having an inlet (18) and outlet end (19) located within a housing (10) with both located in an exhaust gas stream downstream from an engine. The catalytic structure possesses a convexly shaped inlet end (18) while the housing possesses similarly shaped, frusto-conical upstream or inlet portion (20). An inventive feature of the of the system is that the substrate is located within the housing in a manner whereby the substrate inlet face and the housing upstream portion are in a sufficiently close relationship to result in a uniform flow of exhaust through the substrate inlet face as well as a rel-atively low pressure drop in the in the inlet portion.

FIG. 4

## Description

The application claims the benefit of U.S. Provisional Application No. 60/015,860 filed July 8, 1996, entitled EXHAUST GAS PURIFYING SYSTEM, by Xiaodong Fu, Mallangouda D. Patil, Brian E. Stutts, and Paul M. Then.

The present invention relates to an improved design engine exhaust purifying system comprised of a honeycomb structure having a convex upstream inlet face located within a housing having a frusto-conically (funnel) shaped upstream portion and more particularly to an exhaust purifying system whereby the honeycomb substrate and the housing are in a closely fitting relationship resulting in a system which exhibits uniform flow through the substrate.

## BACKGROUND OF THE INVENTION

Early exhaust gas purifying systems were comprised of a cylindrically shaped catalyst coated honeycomb substrate having a flat inlet face. Although this conventional system effectively converted pollutants into non-toxic gases, this early system design exhibited a non-uniform flow distribution. Specifically, the high velocity exhaust gases which were emitted from the relatively small diameter exhaust pipe of an internal combustion engine did not dissipate when passing from the exhaust pipe into larger diameter housing in which the catalyst structure was located. As a result, a larger portion of the high velocity exhaust gas tended to flow through the center of the honeycomb structure than through the peripheral portion.

As a result of this non-uniform flow distribution of exhaust gas through the center, these catalytic converter systems exhibited a loss of conversion efficiency, as well as deactivation of the converter in the regions of highest velocity. In addition to non-uniform flow distribution these early systems also exhibited a high pressure drop which, in turn resulted in decreased engine performance.

One final scheme for alleviating non-uniform flow is disclosed in U.S. Pat. No. 3,749,130 involves the positioning of a deflector member within the flow of exhaust gases being discharged from the exhaust pipe of an internal combustion engine into a chamber of greater transverse cross-section than the exhaust pipe and containing a catalyst support, so as to deflect the high velocity discharge stream and provide a substantially uniform flow front as the exhaust gas approach the catalyst support structure. Although this system resulted in a more uniform flow front, this use of this deflector added not only cost but complexity in these systems.

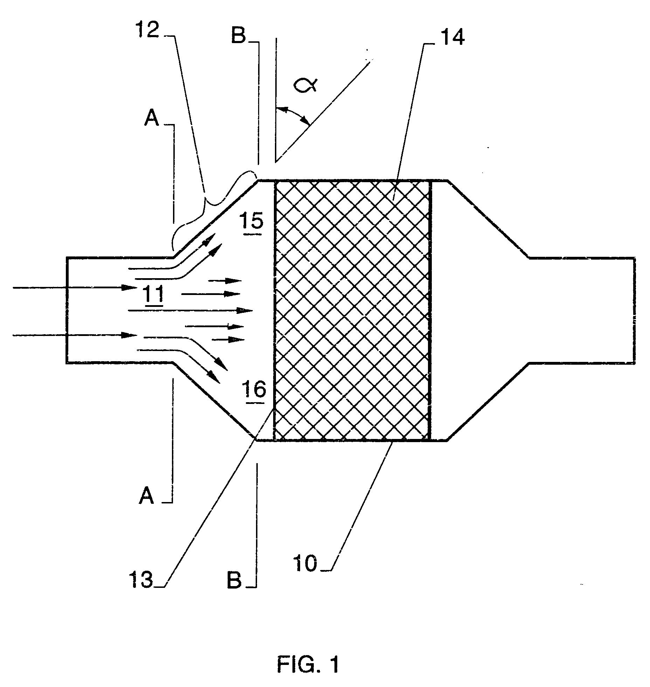

Conventional systems in use today solve the uneven flow front problem through the utilization of a diffuser for transitioning the flow to the larger diameter housing and catalyst substrate; this conventional system being illustrated in FIG. 1. Although this system performed better than earlier systems, it still exhibited the same shortcomings exhibited by the earlier systems; the flow still tended to be non-uniform as is indicated by the flow which is illustrated in FIG. 1 and the systems exhibited the undesirable high pressure drop. Although it has been proposed that the non-uniformity of the flow could be alleviated by increasing the length of the diffuser, a long diffuser is not feasible in limited space application such as in automotive exhaust systems.

There, therefore continue to be a need for a simple, yet efficient exhaust gas purification system which is simple and compact in design yet provides a low pressure drop and a uniform exhaust flow through the inlet of the catalytic substrate.

## SUMMARY OF THE INVENTION

Accordingly, described herein is an engine exhaust purifying system having a catalytic substrate and associated housing of an optimized design which not only improves the performance of the catalytic converter, but also does not significantly increase either the cost or size of the exhaust purifying systems. This system is comprised of a catalytic substrate structure having an inlet and outlet end located within a housing; the housing located in an exhaust gas stream downstream from an engine. The catalytic structure possesses a convexly shaped inlet end while the housing possesses similarly shaped, frusto-conical upstream or inlet portion. One final feature of the system is that the substrate is located within the housing in a manner whereby the substrate inlet face and the housing upstream portion are in a sufficiently close relationship to result in a uniform flow of exhaust through the substrate inlet face.

## BRIEF DESCRIPTION OF THE FIGURES

FIG. 1 is a sectional (longitudinal) view illustrating a conventional engine exhaust purifying system having a honeycomb structure disposed within a housing.

FIG. 2 is a graph illustrating the typical pressure drop exhibited by a conventional exhaust purifying system.

FIG. 3 is a graph illustrating the non-uniform exhaust gas flow exhibited at the substrate inlet by a conventional exhaust purifying system.

FIG. 4 is a flow profile illustrating an "eddy zone" typically exhibited by a conventional exhaust purifying system.

FIG. 5 is a graph illustrating components of the total pressure drop for a conventional exhaust purifying system.

FIG. 6 is a sectional (longitudinal) view illustrating the inventive exhaust gas purifying system.

FIGS. 7 and 8 are two further embodiments of inventive exhaust gas purifying system.

FIGS 9A and 9B are sectional (longitudinal) views illustrating both a conventional and the inventive engine exhaust purifying systems which were subject to simulated exhaust flows.

FIG. 10 is a graphical illustration representative of the non-uniform flow profile exhibited by the conventional exhaust purifying system subject to simulated exhaust.

FIG. 11 is a graphical illustration representative of the uniform flow profile exhibited by the inventive exhaust purifying system subject to simulated exhaust.

## DETAILED DESCRIPTION OF THE INVENTION

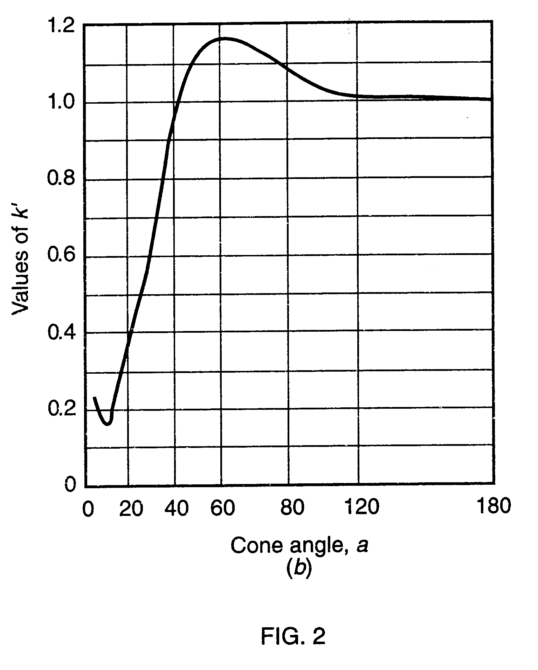

In conventional exhaust gas purifying system, like that system illustrated in FIG. 1, the angle $\alpha$ between the housing 10 inlet zone portion's 11 wall 12 and the inlet face 13 of the catalytic substrate 14, hereinafter referred to as the cone angle, is typically quite large, generally ranging from about 60-120°. The direct result of this large cone angle is the aforementioned and undesirable non-uniform exhaust gas flow distribution and the high pressure drop experienced in the inlet zone. The graph illustrated in FIG. 2 is representative of the pressure drop ($k'$)-cone angle ($\alpha$) relationship typical of conventional exhaust systems; i.e., increasing pressure drop with a corresponding increase in cone angle. As can be observed in the graph the highest pressure drop coefficient $k'$ generally occurs in the cone angle range between about 60-120°.

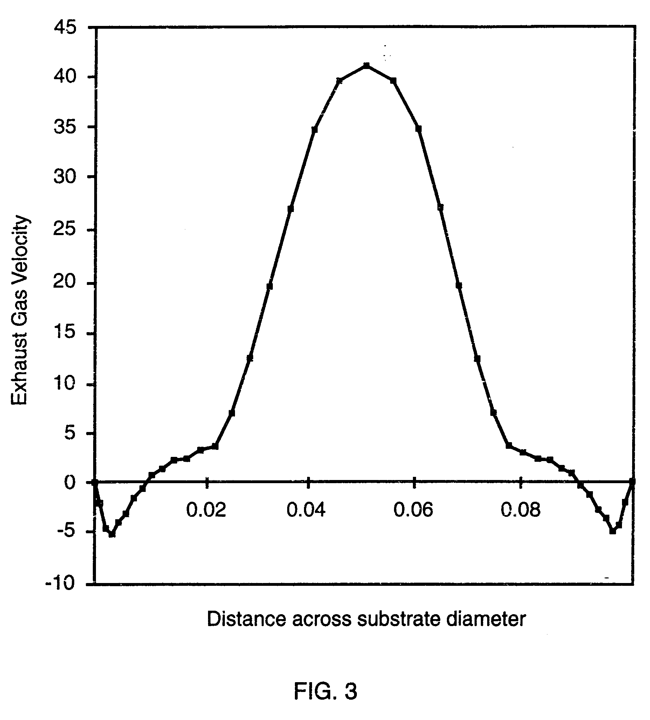

FIG. 3 graphically illustrates non-uniform exhaust flow distribution across the inlet of the substrate representative of a typical conventional exhaust purification systems having the aforementioned large cone angle; the x-axis represents the distance across the diameter of the substrate while the y-axis represents the actual exhaust gas velocity. As the purpose of the graph is to illustrate a typical/representative non-uniform flow of conventional exhaust system, velocity and position measurements are not deemed necessary since the non-uniform flow distribution will be apparent irrespective of velocity or position numbers. FIG 1. also schematically illustrates the predicted non-uniform exhaust gas flow pattern, based on fluid dynamic principles, which would be representative of the typical exhaust flow for the conventional systems; in general, the exhaust gas, as represented by the arrows, which enters the inlet portion of housing 11 flows mostly through the center regions as opposed to the peripheral regions of the catalytic substrate. In other words, as a result of standard fluid dynamics, a higher volume of the exhaust gases would tend to flow through the center regions than through the peripheral regions.

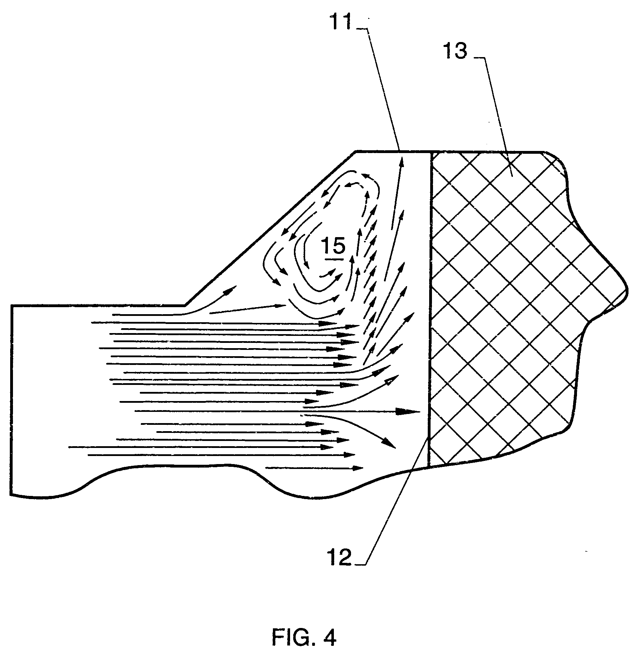

While not intending to be limited by theory it is thought that this non-uniform flow distribution and high pressure drop phenomenon occurs at the substrate inlet face, in part because of the high cone angle-caused eddy zones 14 and 15 which are generated as the exhaust gas flows into diffuser or inlet portion of the housing. FIG. 4 is a schematic representation of an exhaust flow eddy which may be found in zones 15 and 16. Generally, these eddies: (1) form as a result of the flow separation in this inlet portion which is caused by the high cone angle; and (2) result in the exhaust gas flow, in close proximity to the housing wall, to become separated from the main flow.

This phenomenon is now explained in greater detail. Referring again to FIG. 1, it has been observed that when the gas suddenly passes into the inlet zone 11, or diffuser, a portion of the kinetic energy of the exhaust gas will be converted to pressure energy (or molecular potential) so that the static pressure of cross section B-B will be greater that of A-A (if this energy loss is not converted) and thus the mean velocity of the gas of B-B will be smaller than A-A. As a result of this pressure/velocity differential the aforementioned two large eddy zones, will be generated in the inlet zone which in turn directly cause the gas velocity of the exhaust gases to become very non-uniform as it enters the inlet face of the substrate.

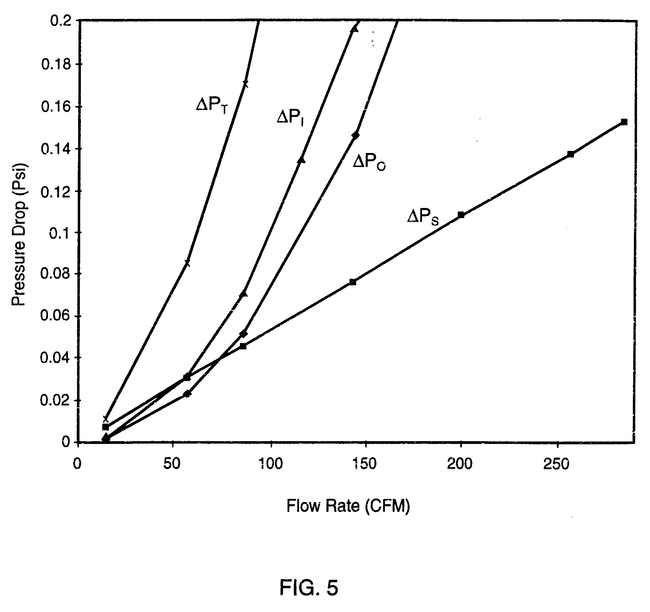

In conventional exhaust gas purification systems, based on the exhausting gas flow rate and the geometry of the converter, it has been realized that the pressure drops in the inlet and outlet zones each forms a much greater portion of the total pressure drop than the pressure drop through the converter. Referring specifically now to FIG. 5, it has been determined that inlet zone for the practical gas flow rate, above about 75 cfm, the pressure drop (the energy loss) caused by those two large eddy zones forms the dominate portion of the total pressure drop. FIG. 5 reveals that the total pressure drop $\Delta P_T$, in the system is a combination of the three pressure drops which occur in the system: pressure drop in the inlet portion $\Delta P_I$, pressure drop across the substrate $\Delta P_S$ and pressure drop in the outlet zone $\Delta P_O$. The graph reveals that the pressure drop across the substrate is linear function of the gas flow rate does not make up the greatest portion of the total pressure loss. On the other hand, the graph reveals that the pressure drop in the inlet zone forms a major part of the total pressure drop and is 2nd power function of the gas flow rate; the function represented by the formula $\Delta P_I = 1.1\rho/((V_1^2 - V_2^2)/2)$. Therefore, it follows that the improvement of the substrate inlet design which results in reducing the intensity and size of the two large eddy zones will bring about the greatest improvement in both the uniformity of the exhaust flow distribution and the lowering of the pressure drop.

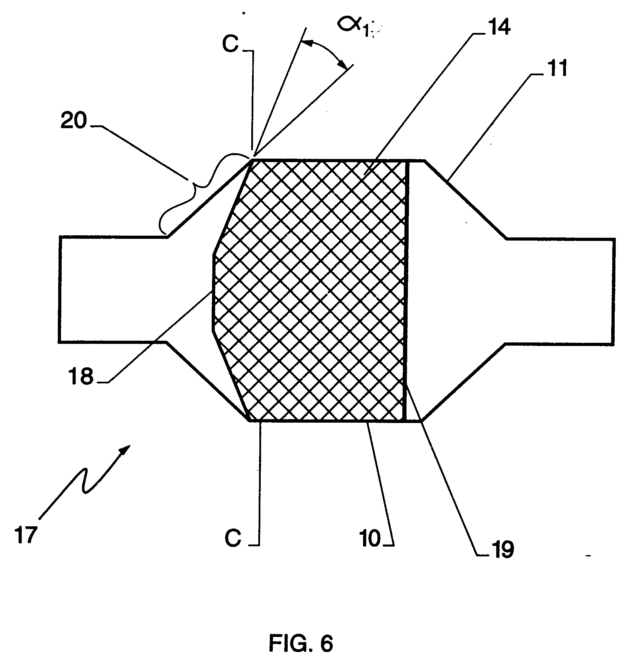

As indicated above, fluid flow dynamics and principles dictate that the modification of the substrate inlet shape and the relationship with the housing inlet zone is the most optimal way to realize the above goal. Therefore, in the present invention, as illustrated in FIG. 6, the engine exhaust purifying system 17 comprises a catalytic substrate 14 having an inlet 18 and outlet 19 end or face located within a housing 10; the system being located in an exhaust gas stream downstream from an engine (not shown). The catalytic substrate 14 possesses a convexly shaped inlet end 18 while the housing 11 possesses similarly shaped, frusto-conical upstream or inlet portion 20. In the embodiment depicted in FIG. 6 the convexly shaped inlet end 18 of the catalytic substrate exhibits an frusto-conical shape.

A critical feature of the inventive system is that the substrate is located within the housing 10 in a manner whereby the substrate inlet face 18 and the housing inlet portion 20 are in a sufficiently close relationship and sufficiently close in shape so as to result in a much more uniform flow of exhaust gas through substrate the inlet face when compared to conventional systems. In other words, since the inlet housing portion 20 design substantially matches that of the catalytic substrate inlet face shape 18, the backpressure is reduced, thereby allowing for a more evenly distributed exhaust gas flow through the honeycomb catalytic substrate.

The housing inlet portion 20 and the substrate inlet face 18 exhibit a cone angle $\alpha_1$ which is much less than that exhibited by conventional systems and preferably less than about 20°; more preferably, between about 2 to 12°. Referring back to FIG. 2 it is observed that this preferred angle range is such that the will likely result in the lowest values of $k'$ or pressure loss coefficient; specifically FIG. 2 reveals that when the angle is between 8-20°, the exhaust gas flow is predicted to exhibit both good uniformity and low pressure drop.

One measure of velocity is the relative non-uniform velocity factor N, which is defined by the following formula.

$$N = \frac{\Sigma_n \sqrt{(V_I - V_A)^2}}{n V_A};$$

wherein $V_I$ is the local velocity, $V_A$ is the average velocity and n is the number of local velocities measured. The lower the value of N the more uniform the flow is predicted to be. It has been determined experimentally that the inventive system is able to produce at least a 2.5 times lower relative non-uniform velocity distribution value (N) when compared to conventional systems; i.e., a typical/representative N for the inventive system being about 0.08 while a typical/representative N for the conventional systems being about 0.187. Since the $\alpha_1$ is less than $\alpha$ in Figure 1, representative of conventional systems, the exhaust flow kinetic energy will not decrease as much as that in conventional system designs. Therefore, the eddy zone will be restricted, resulting in a more uniform flow.

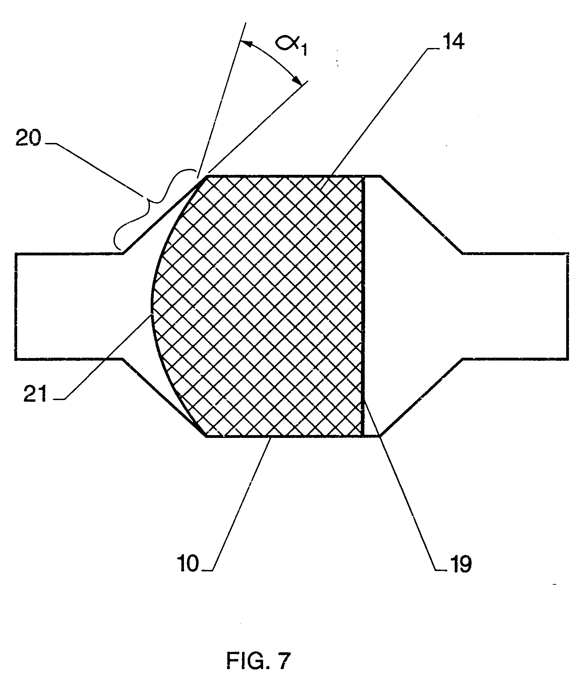

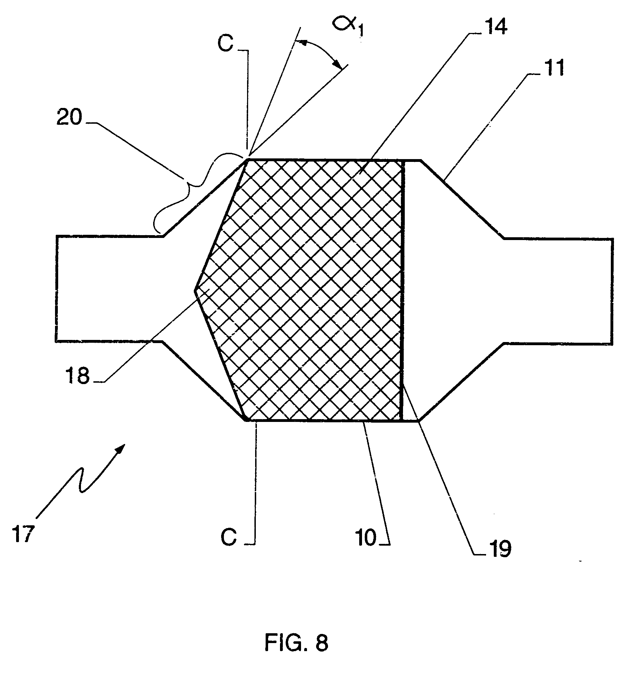

Illustrated in FIGS 7 and 8, are two further embodiments of the inventive exhaust gas purifying system. In the FIG. 7 system the substrate's 14 convexly shaped inlet end 21 exhibits a ellipsoidal shape, while the convexly shaped inlet end 22 of the substrate in the FIG. 8 system exhibits a conical shape. The exhaust purification system in either embodiment, is similar to that system in FIG. 6, except that the inlet end shapes, although convex, are slightly modified. Hence, like parts for FIG. 7 and 8 are identified with the same reference numerals used for the parts of the exhaust purifying system detailed in FIG. 6.

The advantages of the optimized substrate and housing shape and relationship are the following: (1) This system causes the exhaust gas flow to distribute uniformly in the cross section C-C; (2) The exhaust gas flow near the wall has much higher kinetic energy then that of the original design, thereby significantly reducing the intensity of the large eddy zones; (3) The flow distribution in the center zone of the substrate will be significantly reduced because the mean velocity of the flow near the wall does not drop down as much was exhibited in the conventional systems and the gas mass conservation should still held so that the flow distribution can be improved; (4) As a result of the reduction in the intensity of turbulent level is significantly reduced, the pressure drop will be reduced too; and, (5) The resulting uniform exhaust gas flow will result in lower emissions and longer durability of the catalyst system.

In a preferred embodiment the catalytic substrate is comprised of a honeycomb substrate, preferably extruded. The honeycomb substrate can be any material suitable for high temperature application such as certain metals, metal alloys, ceramics, glass-ceramics, glass, high surface area-high temperature stable oxides, and combinations of these materials. Examples of useful substrate materials include, cordierite, mullite, clay talc, zircon, zirconia, spinel, alumina, silica, borides, lithium aluminosilicates, alumina silica, feldspar, titania, fused silica, nitrides, carbides and mixtures of these. Useful metals for the substrate include, substrates formed of iron group metals such as Fe-Al, Fe-Cr-Al alloys, stainless steel, and Fe-Nickel alloys.

Suitable catalysts for use in the instant apparatus are any of those catalysts which are capable not only of oxidizing hydrocarbons to form water and carbon dioxide but also of converting carbon monoxide and NOx in the engine exhaust stream to innocuous products. Such catalysts, well known in the art and commonly used in automotive catalytic converters, include noble metal oxidation catalysts such as platinum, rhodium, and palladium as well as mixtures of these. Preferably, a three-way catalyst individually capable converting NOx, carbon monoxide, hydrocarbons, are preferred, e.g. platinum/palladium/ rhodium on gamma alumina with rare earth oxides (e.g., ceria) or platinum on ceria-alumina combined with rhodium on zirconia. It is contemplated that these catalysts may be incorporated into the honeycomb substrate by known methods.

The present invention is hereinafter described in more detail by way of Examples. However, the present invention is not restricted to these examples. In other words, the following non-limiting examples are presented to more fully illustrate the invention.

EXAMPLES

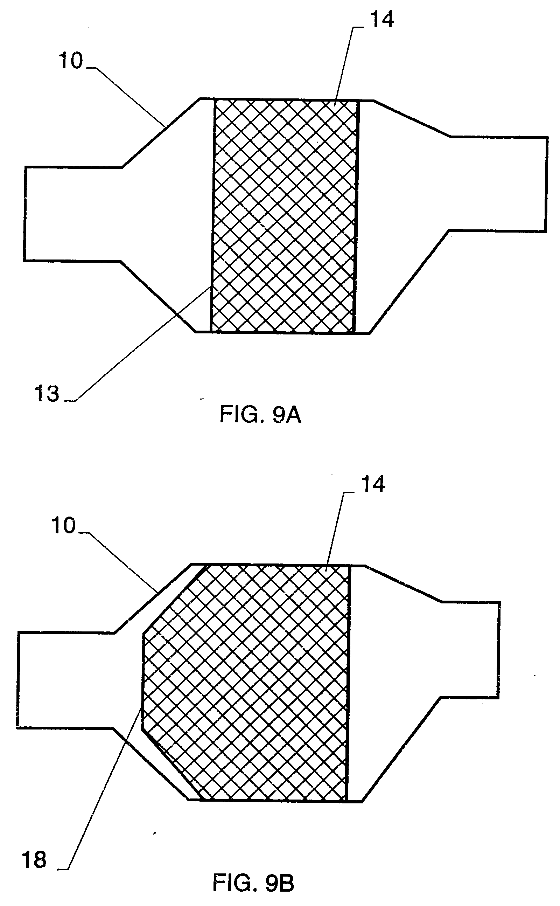

Simulated exhaust systems schematically illustrated in FIGS. 9A and 9B were used to compare the exhaust gas distribution of the inventive system with that of a conventional system; FIG 9A and FIG. 9B representative of the conventional and the inventive exhaust gas purifying systems, respectively. Each of the exhaust systems was comprised of an elliptical honeycomb structure 14 exhibiting a long and short axis of 5.78 in. (14.68 cm) and 3.03 in. (7.7 cm), respectively, with the only difference being that the FIG. 9B system possessed honeycomb substrate having a frusto-conical inlet face 18 while the conventional system possessed a honeycomb substrate having a flat inlet face 13.

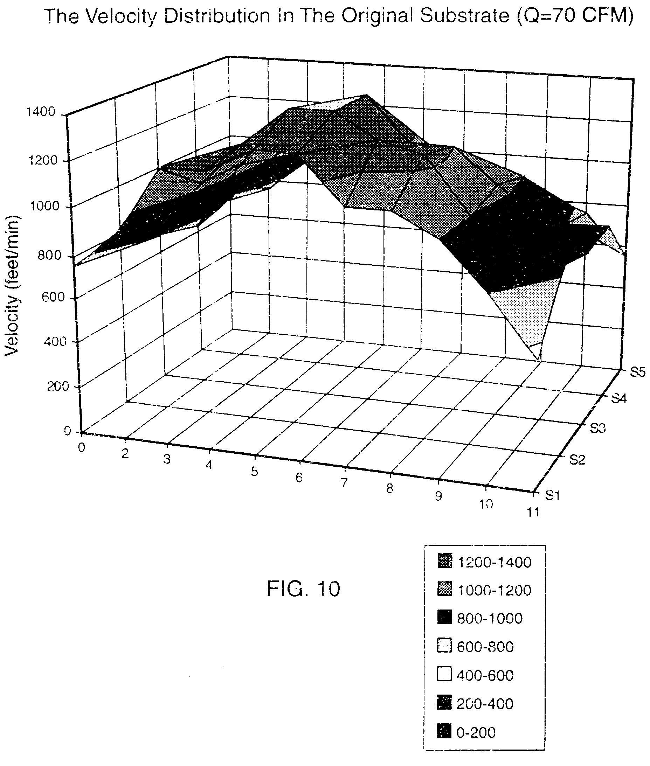

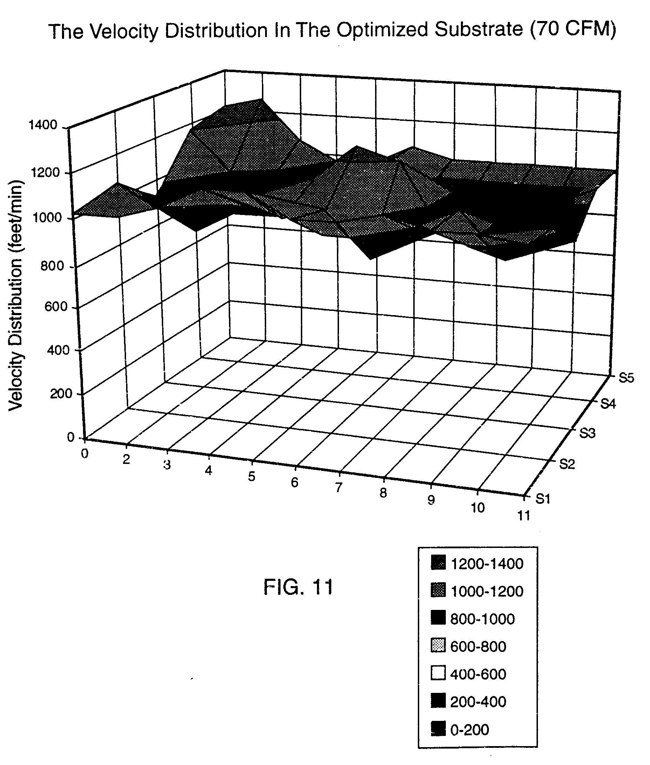

Room temperature air, simulating exhaust flow, was passed into the each of the respective housings and directed at the honeycomb substrates at a volumetric flow rate of about 70 cubic feet per minute (cfpm). The linear flow rate, in feet per minute (fpm), of the air leaving the honeycomb substrates was measured at several positions on the downstream face of the honeycomb structures utilizing a hot-wire anemometer; the intersections of horizontal positions 1-11 and vertical positions S1-S5 as indicated on FIGS. 10 and 11. These measurements were recorded and utilized to generate a graphical representation of the simulated exhaust flow profile for each of the two systems; FIG. 10 -- conventional system, FIG. 11-- inventive.

A comparison of the FIGS. 10 and 11 flow profiles graphically illustrates that the simulated exhaust flow distribution of the inventive system with its optimized substrate/housing design is significantly more uniform than that flow distribution produced by the conventional comparison exhaust purifying system.

As further proof of the increased uniformity of the inventive system, relative non-uniform velocity factors were calculated for each of the two Example exhaust purifying systems. The N value for the conventional system was calculated to be 0.187 while the N value for the inventive Example system was calculated to be 0.08 which equates to a 57% increase in uniformity.

In addition to the embodiments discussed above, it will be clear to persons skilled in the art that numerous modifications and changes can be made to the above invention without departing from its intended spirit and scope.

## Claims

1. An engine exhaust purifying system comprising:

   a catalytic substrate having an inlet and outlet end located within a housing and located in an exhaust gas stream downstream from an engine, the substrate having a convexly shaped inlet end, the housing having a frusto-conically shaped inlet portion, the substrate located within the housing in a manner whereby the substrate inlet face and the housing inlet portion are in a sufficiently close relationship to result in a uniform flow of exhaust through the substrate inlet face.

2. The exhaust purifying system of claim 1 wherein the substrate inlet face exhibits a shape selected from the group consisting of cone-shaped, ellipsoidal-shaped and frustoconical shaped.

3. The exhaust purifying system of claim 1 wherein a cone angle less than about 20° is formed between the housing inlet portion and the substrate inlet face.

4. The exhaust purifying system of claim 3 wherein the cone angle is between about 2 to 12°

5. The exhaust purifying system of claim 1 wherein catalyzed structure comprises a three-way catalyst, a light-off catalyst, or an oxidation catalyst.

6. The exhaust purifying system of claim 1 wherein the catalyzed structure comprises a catalyst selected from the group consisting of noble metal catalysts, such as platinum, rhodium, palladium, or mixtures of these.

7. The exhaust purifying system of claim 1 wherein the catalyzed structure comprises a catalyst supported on a substrate.

8. The exhaust purifying system of claim 1 wherein the substrate is in a form selected from the group consisting of pellets and cellular monoliths.

9. The exhaust purifying system of claim 1 wherein the cellular monolith is either an extruded ceramic honeycomb structure or a wrapped and welded metal sheet honeycomb structure.

FIG. 1

FIG. 2

FIG. 3

FIG. 4

FIG. 5

FIG. 6

FIG. 7

FIG. 8

FIG. 9A

FIG. 9B

The Velocity Distribution In The Original Substrate (Q=70 CFM)

FIG. 10

Legend:
- 1200-1400
- 1000-1200
- 800-1000
- 600-800
- 400-600
- 200-400
- 0-200

The Velocity Distribution In The Optimized Substrate (70 CFM)

FIG. 11

Legend:
- 1200-1400
- 1000-1200
- 800-1000
- 600-800
- 400-600
- 200-400
- 0-200

## EUROPEAN SEARCH REPORT

**European Patent Office**

Application Number

EP 97 11 0551

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 24 28 964 A (BOSCH GMBH ROBERT) 2 January 1976<br>* page 3, last paragraph - page 4, last paragraph; figures * | 1,2,5-9 | F01N3/28 |
| X | DE 22 01 881 A (VOLKSWAGENWERK AG) 19 July 1973<br>* page 7, last paragraph - page 8, last paragraph; figure * | 1,2,5-9 | |
| A | DE 36 38 082 A (INTERATOM) 11 May 1988<br>* column 2, line 57 - column 3, line 47; figures * | 1,3,4 | |
| A | GB 1 455 351 A (TENNECO INC) 10 November 1976<br>* page 1, line 63 - page 2, line 88; figures * | 1,5-9 | |
| A | US 3 189 418 A (WRIGHT GARY) 15 June 1965 | | |

TECHNICAL FIELDS
SEARCHED (Int.Cl.6)

F01N

The present search report has been drawn up for all claims

| Place of search | Date of completion of the search | Examiner |
|---|---|---|
| THE HAGUE | 14 October 1997 | Sideris, M |